# EUROPEAN PATENT APPLICATION

(11) **EP 4 545 190 A1**
(43) Date of publication of application: **30.04.2025**
(21) Application number: 24186667.2
(22) Date of filing: 04.07.2024
(51) Int. Cl.: B05C 1/08, B05B 1/20, B05C 1/16, B05C 9/04, B21D 37/18, B26D 7/08, C23C 22/00, F16N 11/00, H01M 4/04

(54) **PUNCHING OIL COATER AND NOTCHING APPARATUS INCLUDING THE SAME**

(30) Priority: 26.10.2023 KR 20230145035
(71) Applicant: SAMSUNG SDI CO., LTD., Giheung-gu Yongin-si, Gyeonggi-do 17084 (KR)
(72) Inventor: MA, Wanjun, 17084 Yongin-si (KR); BAE, Tae-Hwan, 17084 Yongin-si (KR)
(74) Representative: Marks & Clerk LLP

(57) **Abstract**

A punching oil coater (500), comprising:
a coating device (100) configured to:
correspond to feed rollers (FR) that contact an electrode plate (EP) and move the electrode plate (EP) and are at different positions from each other, and
rotate to contact and coat a pair of uncoated portions of mutually symmetrical surfaces of the electrode plate (EP) with punching oil as the feed rollers (FR) press the pair of uncoated portions against the coating device (100) and move the electrode plate (EP);
a sprayer (200) configured to spray the punching oil onto the coating device (100);
a punching oil supply device (300) configured to uniformly control a flow amount and flow rate of the punching oil supplied to the sprayer (200); and
a coating controller (400) configured to control a punching oil coating operation for the electrode plate (EP).

## Description

### BACKGROUND

### 1. Field

Embodiments relate to a punching oil coater and a notching apparatus including the same.

### 2. Description of the Related Art

Secondary batteries may be formed by cutting electrode plates having surfaces of electron collectors coated with active materials to sizes corresponding to battery sizes, forming electrode assemblies by alternately stacking the cut positive and negative electrode plates with separators, and inserting the electrode assemblies into cases in which electrolytes are accommodated.

In this case, the electrode plates may be provided in the form of films having surfaces of current collectors coated with electrode materials that are mixtures of active materials corresponding to polarities, conductors, and binders, and the electrode materials may be partially applied to the electron collectors. Accordingly, the electrode plates may each include a coated portion coated with electrode material and an uncoated portion.

Electrode tabs may be formed on uncoated portions of the film-shaped electrode plates through a notching process, and the electrode plates may be cut to sizes corresponding to battery sizes through a slitting process to form electrodes for individual batteries.

The above information disclosed in this Background section is for enhancement of understanding of the background of the present disclosure, and therefore, it may contain information that does not constitute related (or prior) art.

### SUMMARY

The embodiments may be realized by providing a punching oil coater including a coating device configured to correspond to feed rollers that contact an electrode plate and move the electrode plate and are at different positions from each other, and rotate to contact and coat a pair of uncoated portions of mutually symmetrical surfaces of the electrode plate with punching oil as the feed rollers press the pair of uncoated portions against the coating device and move the electrode plate; a sprayer configured to spray the punching oil onto the coating device; a punching oil supply device configured to uniformly control a flow amount and flow rate of the punching oil supplied to the sprayer; and a coating controller configured to control a punching oil coating operation for the electrode plate.

The coating device may include at least one first coating device in a first position configured to correspond to at least one first feed roller that contacts a second surface of the electrode plate, and coat at least one first uncoated portion on a peripheral portion of a first surface opposite to the second surface; and at least one second coating device at a second position separated from the first position in a conveyance direction of the electrode plate, and configured to correspond to at least one second feed roller that contacts the first surface of the electrode plate, and coat at least one second uncoated portion on a peripheral portion of the second surface symmetrical to the first uncoated portion on the first surface.

The coating device may include a support rod extending in a first direction, which is a width direction of the electrode plate, and separated from the electrode plate in a second direction perpendicular to the first direction; a coating roller rotatably coupled to the support rod that passes through a central portion of the coating roller, the coating roller having a surface in which the punching oil is impregnated; and a contact driver coupled to an end of the support rod and configured to drive the support rod to cause the coating roller to selectively come into contact with at least one of the uncoated portions, whereby the coating roller is configured such that it may coat the at least one of the uncoated portions with the punching oil by a rotation contact with the at least one of the uncoated portions.

Each of the first and second coating devices may include a support rod extending in a first direction, which is a width direction of the electrode plate, and separated from the electrode plate in a second direction perpendicular to the first direction; a coating roller rotatably coupled to the support rod that passes through a central portion of the coating roller, the coating roller having a surface in which the punching oil is impregnated; and a contact driver coupled to an end of the support rod and configured to drive the support rod to cause the coating roller to selectively come into contact with at least one of the uncoated portions, whereby the coating roller is configured such that it may coat the at least one of the uncoated portions with the punching oil by a rotation contact with the at least one of the uncoated portions.

The first and second coating devices may together coat a pair of the uncoated portions. The first and second coating devices may each be provided as a pair of first and second coating devices such that they may together coat two pairs of the uncoated portions, each pair of uncoated portions extending along respective peripheral portions (edges) of the first and second surfaces of the electrode plate.

In an embodiment, the contact driver is coupled to an end of the support rod and is configured to drive the support rod to cause the coating roller to selectively come into contact with a pair of the uncoated portions (e.g. a pair that instead extends down the two peripheral portions (edges), rather than on opposing surfaces of the electrode plate). For example, the coating roller may be configured with two spaced rollers, such that it may coat the pair of the uncoated portions with the punching oil by a rotation contact of the two spaced rollers with the pair of the uncoated portions.

The coating roller may include a rotation roller coupled to the support rod by a bearing and configured to rotate the support rod about a rotation axis; and a porous coating member surrounding a surface of the rotation roller and impregnated with the punching oil.

The contact driver may include a drive rod extending in a third direction perpendicular to the first direction and the second direction and fixed to the support rod; a drive base rotatably coupled to the drive rod; and a rod rotator configured to drive the drive rod to reciprocate about the first direction to cause the coating roller to selectively come into contact with the pair of uncoated portions.

The rod rotator may include a drive rod rotating shaft coupled to the drive base and coupled to the drive rod; a rotation drive device configured to rotate the drive rod rotating shaft; and a detector connected to the coating controller to detect a conveyance state related to movement and stop of the electrode plate and transferring the conveyance state to the rotation drive device.

The rod rotator may be configured to rotate the drive rod such that the coating roller comes into contact with a pair of uncoated portions as the electrode plate moves, and is configured to rotate the drive rod to separate the coating roller from the pair of uncoated portions while the electrode plate is stopped.

The rod rotator may include a servo motor configured to rotate the drive rod according to a pulse width modulation signal.

The drive rod rotating shaft may include a cam structure configured to reciprocate and rotate the drive rod within a set range.

The sprayer may be positioned above the coating roller such that the punching oil is sprayed downwardly by gravity.

The sprayer may include a spray waiting space for storing the punching oil supplied from the punching oil supply device; and a spray portion in fluid communication with the spray waiting space and configured to uniformly supply the punching oil to the coating roller.

The spray portion may include a single slot having a length corresponding to a width of the coating roller.

The spray portion may include a plurality of nozzles arranged at even intervals along a width of the coating roller.

The punching oil supply device may include a syringe pump.

The punching oil supply device may include a cylinder having a storage space in which the punching oil is storable; a piston in the cylinder to seal the storage space from an outside and configured to discharge or introduce the punching oil by adjusting a volume of the storage space through linear reciprocating motion; and a piston driver configured to control the linear reciprocating motion of the piston to discharge the punching oil from the cylinder at a uniform flow amount and flow rate.

The punching oil supply device may further include a flow controller configured to set an operation unit to maintain the uniform flow amount and flow rate.

The flow controller may include a user interface for inputting the flow amount and flow rate of the punching oil and a volume of the punching oil stored in the storage space of the cylinder, and the flow controller may be configured to control the piston driver such that the punching oil is discharged while maintaining the flow amount and flow rate input through the user interface constant during movement of the electrode plate and stops the piston driver while the electrode plate stops.

The piston driver may include a step motor configured to adjust a unit rotation pitch according to the flow amount and flow rate.

The embodiments or further aspects may be realized by providing a notching apparatus for secondary battery manufacturing, the notching apparatus including feed rollers configured to contact an electrode plate having a surface including a coated portion that is coated with an electrode active material and a pair of uncoated portions that are not coated with the electrode active material, and convey the electrode plate by rotation; a punching oil coater configured to coat the pair of uncoated portions of mutually symmetrical surfaces of the electrode plate together with punching oil; a die having an opening corresponding to a set punch shape and to support the electrode plate coated with the punching oil; and a press configured to punch the pair of uncoated portions corresponding to the punch shape to form an electrode tab connected to the coated portion.

In some embodiments the punching oil coater may include a coating device configured to correspond to the feed rollers that contact the electrode plate and move the electrode plate and are at different positions from each other, and rotate to contact and coat the pair of uncoated portions of mutually symmetrical surfaces of the electrode plate with punching oil as the feed rollers press the pair of uncoated portions against the coating device and move the electrode plate; a sprayer configured to spray the punching oil onto the coating device; a punching oil supply device configured to uniformly control a flow amount and flow rate of the punching oil supplied to the sprayer; and a coating controller configured to control a punching oil coating operation for the electrode plate.

The press may include a protruding punch end inserted into the opening to correspond to the punch shape, the protruding punch end may be inserted into the opening to separate a part of the pair of uncoated portions corresponding to the punch shape as a scrap, and the electrode tab may include a part of the pair of uncoated portions remaining to be connected to the coated portion.

The notching apparatus may further include a loading track configured to collect the scrap.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

Features will be apparent to those of skill in the art by describing in detail various embodiments with reference to the attached drawings.

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a schematic view showing a punching oil coater according to one or more embodiments of the present disclosure;
FIG. 2 illustrates a schematic view showing a relationship between an electrode plate in contact with a feed roller and a coating device, according to one or more embodiments of the present disclosure;
FIG. 3 illustrates a perspective view showing a part of an electrode plate according to one or more embodiments of the present disclosure;
FIG. 4 illustrates a coating device of a punching oil coater according to one or more embodiments of the present disclosure;
FIG. 5 respectively illustrates a state where a coating device is in contact with an uncoated portion and a state where the coating device is separated from the uncoated portion, according to one or more embodiments of the present disclosure;
FIG. 6 illustrates details of a sprayer according to one or more embodiments of the present disclosure;
FIG. 7 illustrates a perspective view showing a first modification of a sprayer according to one or more embodiments of the present disclosure;
FIG. 8 illustrates a perspective view showing a second modification of a sprayer according to one or more embodiments of the present disclosure;
FIG. 9 illustrates a schematic view showing a punching oil supply device included in a punching oil coater according to one or more embodiments of the present disclosure;
FIG. 10 illustrates a schematic view showing a notching apparatus including a punching oil coater according to one or more embodiments of the present disclosure; and
FIG. 11 illustrates a flowchart showing a method of coating an uncoated portion of an electrode plate with punching oil by using a punching oil coater, according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used herein, the term "or" is not necessarily an exclusive term, e.g., "A or B" would include A, B, or A and B. As used herein, the terms "first," "second," and the like are merely for identification and differentiation, and are not intended to imply or require sequential inclusion (e.g., a third element and a fourth element may be described without implying or requiring the presence of a first element or second element).

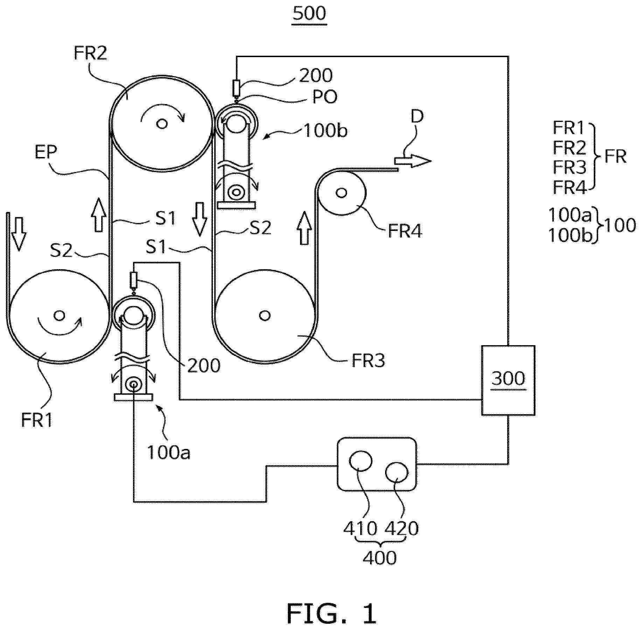

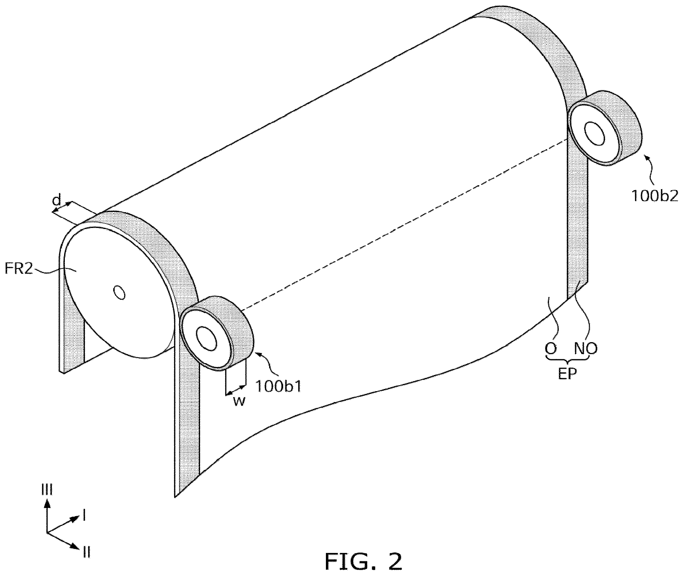

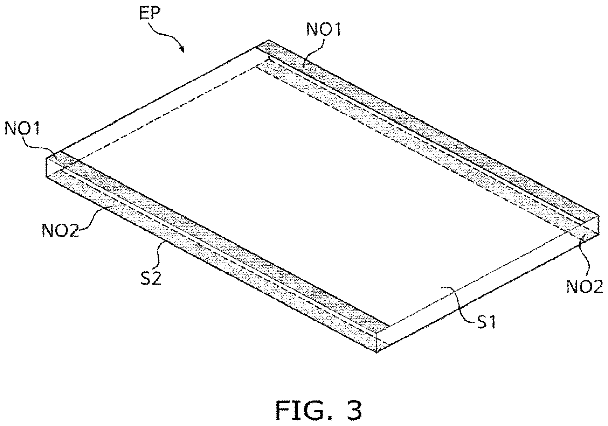

FIG. 1 illustrates a schematic view showing a punching oil coater according to one or more embodiments of the present disclosure. FIG. 2 illustrates a schematic view showing a relationship between an electrode plate in contact with a feed roller and a coating device, according to one or more embodiments of the present disclosure. FIG. 3 illustrates a perspective view showing a part of an electrode plate EP according to one or more embodiments of the present disclosure.

Referring to FIGS. 1, 2, and 3, a punching oil coater 500 according to an embodiment of the present disclosure may include a coating device 100 that presses and contacts an uncoated portion NO with or onto feed rollers FR and coats the uncoated portion NO with punching oil PO, a sprayer 200 that sprays the punching oil PO, a punching oil supply device 300 that supplies the punching oil PO to the sprayer 200, and a coating controller 400 that controls an operation of coating an electrode plate EP with the punching oil PO.

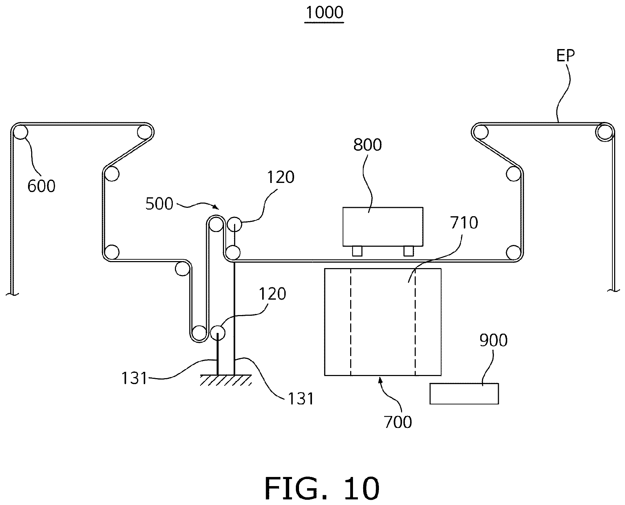

The punching oil coater 500 may coat the uncoated portion NO of the electrode plate EP supplied to a die 700 (see FIG. 10) with the punching oil PO to help reduce friction against the uncoated portion NO during a punching process and to help prevent an active material coated on the electrode plate EP from partially burning and sticking.

In an implementation, the electrode plate EP may come into contact with a plurality of the feed rollers FR arranged in different positions and may move in a constant conveyance direction D by the rotation of the feed rollers FR. In an implementation, the electrode plate EP moved by the rotation of a first feed roller FR1 may move upwardly toward a second feed roller FR2 at an upper portion, be wound around the rotating second feed roller FR2, and then move downwardly again. Subsequently, the electrode plate EP may move upwardly again by the rotation of a third feed roller FR3, move in a horizontal direction by the rotation of a fourth feed roller FR4, and move to a notching apparatus.

In an implementation, the first, second, third, and fourth feed rollers FR1, FR2, FR3, and FR4 may change a conveyance direction while conveying the electrode plate EP, and accordingly, surfaces of the electrode plate EP wound around or facing the feed rollers may be alternately changed. In an implementation, the first feed roller FR1 may contact a second surface S2 of the electrode plate EP, and the second feed roller FR2 may contact a first surface S1 of the electrode plate EP. In an implementation, the third feed roller FR3 may contact the second surface S2, and the fourth feed roller FR4 may contact the first surface S 1. In an implementation, the first surface S1 and the second surface S2, which may be symmetrically positioned, may be alternately exposed each time the electrode plate EP passes through the feed roller FR while being conveyed.

The electrode plate EP may be in the form of a film including a coated portion O (coated with an active material) and an uncoated portion NO, having either both peripheral portions or one peripheral portion in a width direction, not coated with the active material. A pair of cylindrical feed rollers FR (or one feed roller) may be configured to convey the electrode plate EP while contacting both peripheral portions of the electrode plate EP. Accordingly, the first to fourth feed rollers FR1 to FR4 may each have a single cylindrical shape extending (e.g., lengthwise) in a first direction I, which is a width direction of the electrode plate EP, as illustrated in FIG. 2.

As illustrated in FIG. 3, the uncoated portion NO may include a first uncoated portion NO1 around or on the first surface S1 of the electrode plate EP and a second uncoated portion NO2 on the second surface S2 and symmetric to (e.g., overlying and aligned with) the first uncoated portion NO1.

The coating device 100 may include a first coater 100a configured to coat the first uncoated portion NO1 with the punching oil PO, and a second coater 100b configured to coat the second uncoated portion NO2 with the punching oil PO.

The first coater 100a may be positioned to correspond or be adjacent to the first feed roller FR1 at a first position to contact and press the first uncoated portion NO1 by or against the first feed roller FR1, thereby coating the uncoated portion NO1 with the punching oil PO. The second coater 100b may be positioned to correspond or be adjacent to the second feed roller FR2 at a second position (herein higher than the first position) to contact and press the second uncoated portion NO2 by or against the second feed roller FR2, thereby coating the uncoated portion NO2 with the punching oil PO. In an implementation, the first coater 100a and the second coater 100b may come into contact with or be separated from the first uncoated portion NO1 and the second uncoated portion NO2 together at the first and second positions, respectively, and may together coat with the punching oil PO the first and second uncoated regions NO1 and NO2, which are symmetrically positioned (or formed on different/opposing sides of the electrode plates EP).

In an implementation, in a state where two pairs of the first uncoated portion NO1 and the second uncoated portion NO2 are provided - respectively at both peripheral portions (edges) of the first and second surfaces S1 and S2, the first coater 100a and the second coater 100b may each be arranged as a pair (e.g. 100b1 and 100b2 for the second coater 100b - see Figure 2) to together coat all uncoated regions NO on the electrode plate EP with the punching oil PO.

The first uncoated portion NO1 and the second uncoated portion NO2, which may be symmetrically positioned at one peripheral portion of the electrode plate EP, may form electrode tabs through a notching process to be described below. The first uncoated portion NO1 and the second uncoated portion NO2, which may be positioned symmetrically at different peripheral portions of the electrode plate EP, may be removed through the notching process to be described below.

The first coater 100a and the second coater 100b are termed "first" and "second" for classifying the coating device 100 according to a position of an uncoated region of a coating target and may have substantially the same configuration.

For the sake of convenience of description, a coating device and a coater may be used interchangeably.

In an implementation, the punching oil PO may be supplied to the sprayer 200 at a constant flow amount and flow rate, and the sprayer 200 may uniformly supply the punching oil PO to the coating device 100 to thereby uniformly coat the uncoated portion NO with the punching oil PO.

Operations of the coating device 100, the sprayer 200, and the punching oil supply device 300 may be controlled by the coating controller 400. In an implementation, the coating device 100 may contact the uncoated portion NO to be coated with the punching oil PO only while the electrode plate EP is being conveyed, and in a state where the electrode plate EP stops, the coating device 100 may be separated or spaced apart from the uncoated portion NO. In an implementation, as the electrode plate EP stops, the coating of the punching oil PO onto the uncoated portion NO may also be automatically stopped, and thus, the uncoated portion NO may be prevented from being excessively coated with the punching oil PO.

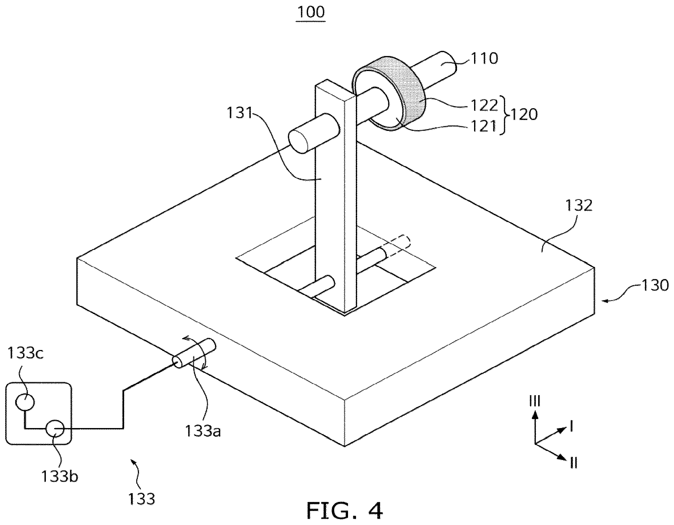

FIG. 4 illustrates a coating device of a punching oil coater according to one or more embodiments of the present disclosure. As illustrated, the coating device 100 may selectively come into contact with the uncoated portion NO of the electrode plate EP and coat the uncoated portion NO with the punching oil PO while rotating according to a linear movement of the electrode plate EP.

In an implementation, the coating device 100 may include a support rod 110, a coating roller 120 rotatably coupled on (e.g., to one end of) the support rod 110, and a contact driver 130 that rotates or moves the support rod 110 to selectively adjust the contact between the coating roller 120 and the uncoated portion NO. In an implementation, the coating roller 120 may include a rotation roller 121 (including a through-hole penetrating the center thereof) and a coating member 122 surrounding an outer peripheral surface of the rotation roller 121. The rotation roller 121 may have sufficient strength and rigidity to maintain a cylindrical shape during a contact process with the uncoated portion NO. In an implementation, the rotation roller 121 may have a cylindrical shape and may be made of light metal, e.g., aluminum and an alloy thereof, or plastic with sufficient hardness, and may have a set width.

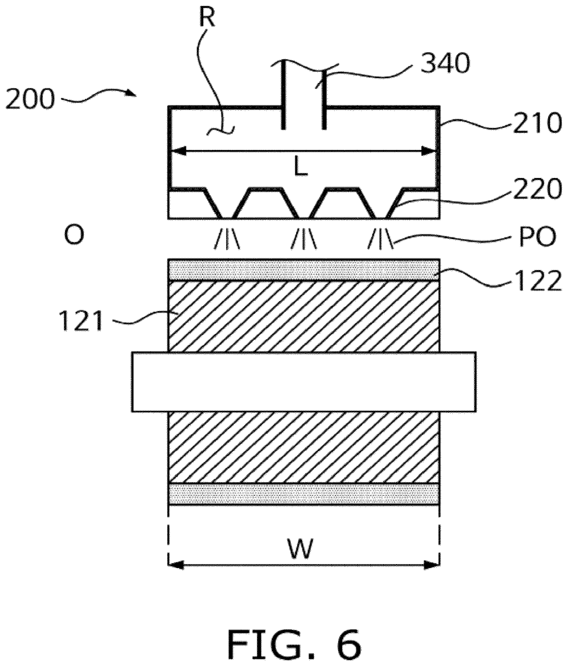

A rotation coupling member, such as a bearing, may be on an inner surface of the rotation roller 121 and may define a through-hole to be coupled to the support rod 110, and may have a roller width w corresponding or about equal to a width d of the uncoated portion NO. See Figure 6.

The coating member 122 may surround an outer surface of the rotation roller 121, and the punching oil PO may be sprayed in a direction of gravity from the sprayer 200 onto an upper portion of the coating member 122 so that the punching oil PO may be impregnated into the coating member 122. See Figures 1 and 6.

The coating member 122 may have a width w that is substantially equal to a width of the rotation roller 121.

In a state where the coating member 122 (into which the punching oil PO has been impregnated) is in contact with the uncoated portion NO, the rotation roller 121 may rotate as the electrode plate EP is conveyed, e.g., by a friction force caused by the load of the rotation roller 121. In an implementation, the coating member 122 may also rotate as the electrode plate EP moves and may apply the punching oil PO onto the uncoated portion NO.

In an implementation, as described below, the punching oil PO supplied by the sprayer 200 may be uniformly impregnated along the width w of the coating member 122, and accordingly, an impregnation concentration of the punching oil PO in the coating member 122 may be uniformly maintained. In an implementation, the uncoated portion NO may be uniformly coated with the punching oil PO. The coating member 122 may be made of a porous material to help improve impregnation properties for punching oil PO. In an implementation, the coating member 122 may be made of porous foam having micropores.

The support rod 110 may be an axial member that is separated from the electrode plate EP in a second direction II, which is a radial direction of the feed roller FR. This second direction II is substantially perpendicular to a first direction I which is a width direction of the coating roller 120 -e.g. it extends lengthwise. The support rod 110 may pass through the through-hole of the coating roller 120 and may be coupled to the coating roller 120 by a rotation coupling member, e.g., a bearing. In an implementation, the coating roller 120 may rotate around the support rod 110, e.g., according to movement of the electrode plate EP that is in contact the coating roller 120.

One end of the support rod 110 may be connected to the contact driver and it may rotate about the first direction I.

The contact driver 130 may be connected to the coating controller 400 to selectively move the support rod 110 according to the conveyance (e.g. moving state) and stopping (e.g. stopped state) of the electrode plate EP, thereby causing the coating roller 120 to contact the uncoated portion NO or to separate the coating roller 120 from the uncoated portion NO. In an implementation, the contact driver 130 may include a drive rod 131, a drive base 132, and a rod rotator 133.

The drive rod 131 may extend (e.g., lengthwise) in the third direction III, which is perpendicular to the first direction I, and may help fix or control the position of the support rod 110 in the second direction II. In an implementation, the drive rod 131 may be a single slender member with sufficient rigidity, and may be fixed to one end of the support rod 110 and may transfer a rotation force applied to the drive rod 131 to the support rod 110 to move the support rod. In an implementation, the drive rod 131 may be fixed to one end of the support rod 110 by a coupling structure.

The drive base 132 may be a three-dimensional structure that rotatably fixes an end portion of the drive rod 131. In an implementation, the drive base 132 may be on a punching reference surface. In an implementation, the drive base 132 may have a coupling groove in the center of the drive base 132 such that the drive rod 131 may be coupled to the drive base 132. The contact driver 130 may be provided as various structures that may help protect the drive rod 131 from the outside and stably rotate the drive rod 131 by absorbing vibration or shock.

The rod rotator 133 may transfer a rotation force to the drive rod 131 by using external drive power. In an implementation, the rod rotator 133 may drive the drive rod 131 to reciprocate the support rod 110 in the first direction I such that the coating roller 120 fixed to the drive rod 131 through the support rod 110 may selectively come into contact with the uncoated region NO. In an implementation, the rod rotator 133 may include a drive rod rotating shaft 133a coupled to the drive base 132 to pass through the coupling groove and protruding to one side of the drive base 132, and a rotation drive device 133b that rotates the drive rod rotating shaft 133a back and forth. In an implementation, the rod rotator 133 may further include a first detector 133c that detects a conveyance state related to movement and stop of the electrode plate EP and transfers the conveyance state to a servo motor 133b.

One end of the drive rod rotating shaft 133a may protrude to the outside of the drive base 132, and the other end may pass through the coupling groove to be rotatably coupled to the drive base 132. An end of the drive rod 131 may be fixed to the drive rod rotating shaft 133a inside the coupling groove, and the drive rod 131 may also rotate by a reciprocating rotation movement of the drive rod rotating shaft 133a.

In an implementation, the drive rod rotating shaft 133a may include a cam structure inside the coupling groove, and the drive rod 131 may reciprocate and rotate within a certain range along a movement path of the cam structure by rotation of the drive rod rotating shaft 133a.

The rotation drive device 133b may be coupled to the drive rod rotating shaft 133a (protruding to the outside of the drive base 132) to rotate the drive rod rotating shaft 133a.

In an implementation, the rotation drive device 133b may include a servo motor that generates a rotational movement according to a pulse width modulation (PWM) signal.

The first detector 133c may be connected to the coating controller 400 and may detect the conveyance state, e.g., the movement and stop states, of the electrode plate EP and transmit information regarding the conveyance state to the rotation drive device 133b.

The coating controller 400 may control a notching process and a punching oil coating process and may selectively stop the conveyance of the electrode plate EP as needed. In an implementation, the first detector 133c may detect a signal related to the movement and stop states of an electrode plate from the coating controller 400 and may transmit the signal to the rotation drive device 133b, and the rotation drive device 133b may rotate the drive rod rotating shaft 133a in response to the signal related to the movement state of the electrode plate EP and stop the drive rod rotating shaft 133a in response to the signal related to the stop state of the electrode plate EP.

In an implementation, the first detector 133c may be omitted, and the coating controller 400 may directly control an operation of the rotation drive device 133b.

In an implementation, the drive rod 131 may rotate to bring the coating roller 120 into contact with the uncoated portion NO as the electrode plate EP moves, and may rotate to separate (e.g., away from) the coating roller 120 from the uncoated portion NO as the electrode plate EP stops or is stopped.

In an implementation, as illustrated in the drawings, the drive rod 131 may rotate back and forth reciprocally by a servo motor or the like, and the coating roller 120 may selectively come into contact with, or may be separated from, the uncoated portion NO. In an implementation, the contact driver 130 may be configured in various ways as long as the coating roller 120 may come into contact with or be separated from the uncoated portion NO as needed.

The punching reference surface may be a base surface of the punching oil coater 500 and may be a bottom surface on which the punching oil coater and a notching apparatus (1000 of FIG. 10) including the punching oil coater are positioned or a separate reference surface that ascends from the bottom surface and determines positions of the feed roller FR and the coating roller 120.

In an implementation, in a state where the feed rollers FR are in different positions in a vertical direction, positions of the coating rollers 120 may be different from each other in the vertical direction, and accordingly, a length of the drive rod 131 fixed to the support rod 110 passing through the coating roller 120 may also be changed.

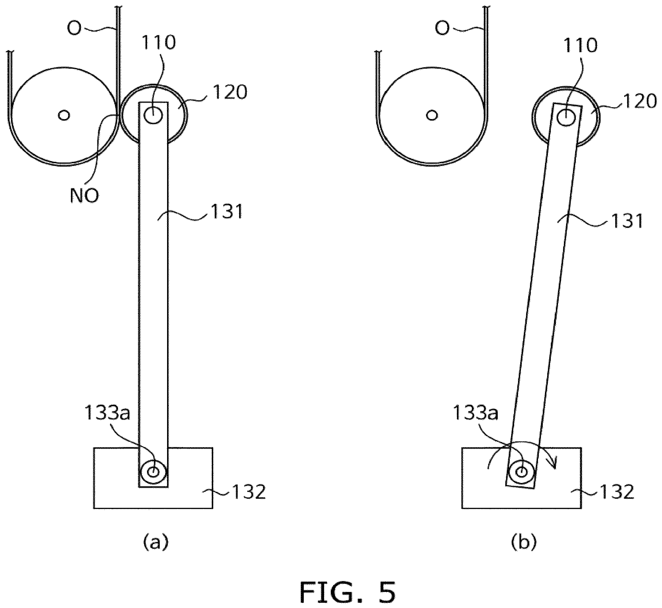

FIG. 5 respectively illustrates in its respective parts a) and b) a state where a coating device is in contact with an uncoated portion and a state where the coating device is separated from the uncoated portion, according to one or more embodiments of the present disclosure. Part (a) of FIG. 5 illustrates a state in which the coating device 100 is in contact with the electrode plate EP, and part (b) of FIG. 5 illustrates a state where the coating device 100 is separated from the electrode plate EP.

As the electrode plate EP is conveyed, the coating roller 120 may be in contact with the uncoated portion NO of the electrode plate EP as illustrated in part (a) of FIG. 5. In contrast to this, in a state where the conveyance of the electrode plate EP is or has been stopped, the coating roller 120 may be separated from the uncoated portion NO of the electrode plate EP as illustrated in part (b) of FIG. 5. In an implementation, the drive rod 131 may be fixed to the support rod 110 passing through the coating roller 120, and the drive rod rotating shaft 133a (on which the drive rod 131 is fixed) may be rotated to cause the coating roller 120 to selectively come into contact with the uncoated portion NO. In an implementation, a conveyance state of the electrode plate EP may be detected by the first detector 133c, and the drive rod rotating shaft 133a may be selectively rotated according to the detected movement state or the detected stop state of the electrode plate to cause the coating roller 120 to come into contact with the uncoated portion NO or to separate the coating roller 120 from the uncoated portion NO.

Referring again to FIG. 1, the sprayer 200 may be above the coating roller 120 and may spray the punching oil PO to the coating roller 120. In an implementation, the sprayer 200 may spray the punching oil PO uniformly in a direction of the width w of the coating roller 120 to uniformly maintain the density or amount of the punching oil PO applied to the uncoated portion NO.

In an implementation, at least one pair of coating rollers 120 or two pairs of coating rollers 120 may be arranged to correspond to respective feed rollers FR, and the sprayer 200 may be positioned one-to-one with the coating roller 120 and may individually supply the punching oil PO to each coating roller 120.

In an implementation, as the electrode plate EP is conveyed, the sprayer 200 may be positioned on an upper portion of the coating roller 120 and may spray the punching oil PO to the coating roller 120. In contrast to this, in a state where the conveyance of the electrode plate EP has been stopped, the sprayer 200 may stop spraying the punching oil PO.

FIG. 6 illustrates in detail a sprayer according to one or more embodiments of the present disclosure. Referring to FIG. 6, the sprayer 200 may include a body 210 that is connected to the punching oil supply device 300 and may include a spray waiting space R for storing the supplied punching oil PO and preparing for spray, and a spray portion 220 that is in a peripheral portion of the body 210, in fluid communication with the spray waiting space R, and that uniformly sprays the punching oil PO stored in the spray waiting space R to the coating roller 120.

The body 210 may be have a three-dimensional shape including the spray waiting space R (e.g., an internal space separated from the outside and connected to the punching oil supply device 300 (see Figure 1) through a supply line 340). The punching oil PO supplied through the supply line 340 may be stored in the spray waiting space R of the body 210.

The spray portion 220 may be on an outer side of the body 210 to face the coating roller 120 and may be in fluid communication with the spray waiting space R of the body 210. The punching oil PO may be sprayed onto a surface of the coating roller 120 by the spray portion 220. In an implementation, the spray portion 220 may include at least one spray hole in a rear or bottom surface of the body 210. The coating member 122 may be made of porous foam such that the punching oil PO may be easily impregnated into the coating member 122.

In an implementation, the spray portion 220 may be configured or arranged in a line shape having a spray length L corresponding to, or about equal to, the width w of the coating roller 120 to uniformly spray the punching oil PO onto the coating member 122.

The punching oil PO may be sprayed along the spray length L to be uniformly impregnated into the coating member 122, e.g., in a direction of the width w. In an implementation, the coating member 122 may uniformly maintain an impregnation concentration of the punching oil.

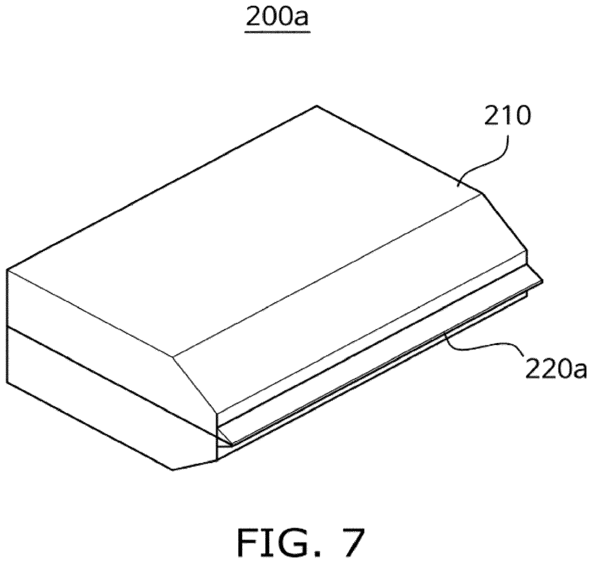

FIG. 7 illustrates a perspective view showing a first modification of a sprayer according to one or more embodiments of the present disclosure. As illustrated in FIG. 7, a first modified sprayer 200a may have substantially the same configuration as the sprayer 200 illustrated in FIG. 6, except that the spray portion 220 may be a continuous spray slot 220a.

The spray slot 220a may have a protruding structure that extends from one side of the body 210 to the outside, may have a spray length L, and may have a line-shaped slot of which a central portion is open. In an implementation, the punching oil stored in the spray waiting space R may be continuously sprayed in a width direction of the coating member 122 along the spray slot 220a.

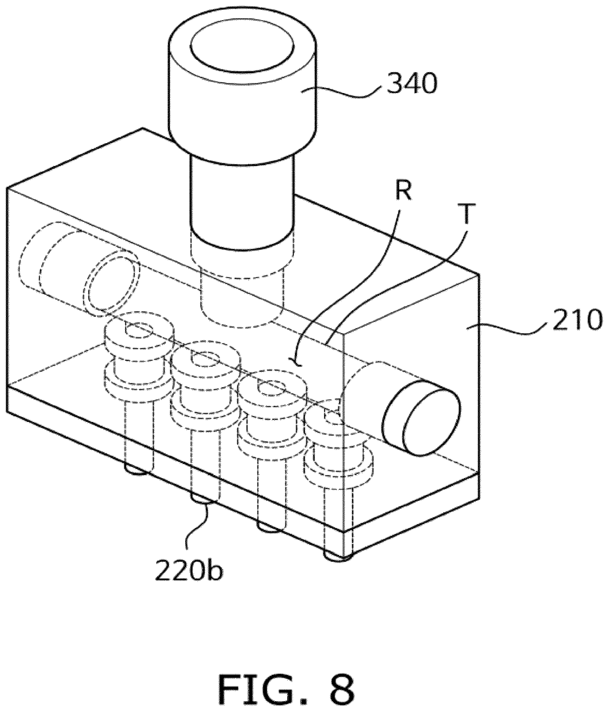

FIG. 8 illustrates a perspective view showing a second modification of a sprayer according to one or more embodiments of the present disclosure. As illustrated in FIG. 8, a second modified sprayer 200b may have substantially the same configuration as the sprayer 200 illustrated in FIG. 6, except that the spray portion 220 may include a plurality of spray nozzles 220b aligned at equal intervals.

A tank T having a spray waiting space R in fluid communication with a tube connected to a supply line 340 may be inside a body 210, and the spray nozzles 220b may be in fluid communication with the spray waiting space R and at a lower portion of the tank T.

The spray nozzles 220b may be aligned at regular intervals along a length L direction and may each have one end in fluid communication with the spray waiting space R and the other end adjacent to an upper surface of the coating member 122, and may extend outwardly from the body 210 to be adjacent to a surface of the coating member 122.

In an implementation, spaces between the spray nozzles 220b may be adjusted such that a diffusion area of the punching oil sprayed from each of the spray nozzles 220b corresponds to the space between adjacent spray nozzles.

Referring again to FIG. 1, the punching oil supply device 300 may supply the punching oil to the or each sprayer 200 at a constant flow amount and flow rate. In an implementation, the punching oil supplied at a constant flow rate may be uniformly sprayed onto the coating member 122 or the or each coater by the sprayer 200, and accordingly, the density or amount of the punching oil impregnated in the coating roller 120 may be uniform. In an implementation, the punching oil supply device 300 may include a pump structure for maintaining a constant flow amount and a constant flow rate of the supplied punching oil.

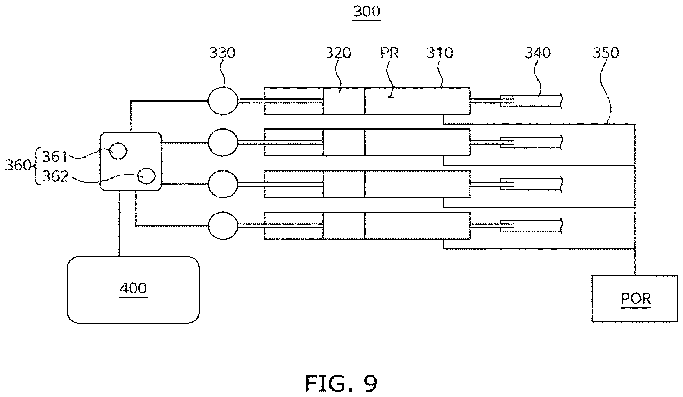

FIG. 9 illustrates a schematic view showing a punching oil supply device included in the punching oil coater according to one or more embodiments of the present disclosure. As illustrated in FIG. 9, the punching oil supply device 300 may include a plurality of pump structures individually connected to the sprayer 200. The sprayer 200 may be individually connected to the punching oil supply device 300, and the sprayer 200 may be provided for each coating device 100, and accordingly, the punching oil supply device 300 may be provided for each coating device 100.

In an implementation, the punching oil supply device 300 may include an injection cylinder 310, a piston 320, a piston driver 330, a supply line 340, an inflow line 350, and a flow controller 360. The injection cylinder 310 may have a piston space PR (of which size may be variably adjusted by the piston 320 inside the injection cylinder 310 and which accommodates the punching oil PO). The injection cylinder 310 may be connected to the sprayer 200 through the supply line 340 and connected to a punching oil reservoir POR through the inflow line 350.

In an implementation, the injection cylinder 310 may have various shapes or materials as long as the injection cylinder 310 has sufficient strength to maintain a shape and size of the piston space PR. An end of the injection cylinder 310 may be coupled to the supply line 340 connected to the sprayer 200, and the inflow line 350 in fluid communication with the piston space PR may be on a part of the injection cylinder 310.

After the piston space PR is reduced by a forward motion of the piston 320, the punching oil PO in the piston space PR may be supplied to the sprayer 200 along the supply line 340. In contrast to this, after the piston space PR has been increased by a backward motion of the piston 320, the punching oil PO may flow from the punching oil reservoir POR into the piston space PR along the inflow line 350. In an implementation, a vacuum pump that may help increase the inflow efficiency of the punching oil PO from the punching oil reservoir POR by making pressure of the piston space PR lower than atmospheric pressure may be further included.

The piston driver 330 may control a linear reciprocating motion of the piston 320 to uniformly adjust a flow amount and flow rate of the punching oil PO discharged from the injection cylinder 310. In an implementation, a flange may be positioned in an end of the piston 320, and the piston driver 330 may be coupled to the flange to precisely control a linear movement of the flange to correspond to the set flow amount and flow rate. In an implementation, the flow amount and flow rate of the punching oil PO supplied to the sprayer 200 may be set uniformly, and a constant flow amount of the punching oil PO may be supplied to the sprayer 200 over time.

In an implementation, the piston driver 330 may be a step motor capable of adjusting a unit rotation pitch according to a flow amount and flow rate. In an implementation, various drive structures may be used as the piston driver 330 as long as the punching oil PO may be supplied to the sprayer 200 at a constant flow amount and flow rate.

The supply line 340 may connect the injection cylinder 310 to the sprayer 200 such that the punching oil stored in the cylinder 310 may be supplied to the sprayer 200 by a forward motion of the piston 320. The inflow line 350 may connect the cylinder 310 to the punching oil reservoir POR such that the punching oil may flow into the cylinder 310 by a backward motion of the piston 320. The supply line 340 and the inflow line 350 may each be composed of a flexible tube to increase the freedom of installation of the punching oil supply device 300.

The flow controller 360 may control the piston driver 330 such that the punching oil PO may be supplied at a set flow amount and flow rate. In an implementation, an operation unit of the piston driver 330 may be set to supply the punching oil PO at the set flow amount and flow rate. In a state where the piston driver 330 is configured as a step motor, the flow controller 360 may adjust a unit rotation pitch of the step motor to a pitch corresponding to a flow amount and flow rate.

The flow controller 360 may be connected to the coating controller 400. In an implementation, the flow controller 360 may include a second detector 361 for detecting movement and stop states of the electrode plate EP and a user interface 362 for inputting a flow amount, a flow rate, and a volume of the punching oil PO stored in the piston space PR of the injection cylinder 310.

The second detector 361, like the first detector 133c, may be connected to the coating controller 400 and may detect a conveyance state of the electrode plate EP that repeats stop and movement states according to drive conditions of a notching apparatus 1000. The piston driver 330 may be controlled by the flow controller 360 to operate or stop according to the detected conveyance state of the electrode plate EP.

In an implementation, the second detector 361 may be omitted, and instead, the coating controller 400 may directly control the flow controller 360.

The user interface 362 may set a control reference for the piston driver 330 of the flow controller 360 by setting a flow amount and flow rate at which the punching oil PO is supplied. The user interface 362 may be in the form of, e.g., a touch panel, a keyboard, or a mouse such that a user may easily input data. In an implementation, the user interface 362 may receive a setting value from a central management device (e.g., a central management server).

The flow controller 360 may include a control center that is connected to the second detector 361 and the user interface 362 and controls an operation of the piston driver 330. In an implementation, the piston driver 330 may discharge the punching oil PO from the cylinder 310 at a flow amount and flow rate set according to a conveyance state of the electrode plate EP.

The flow controller 360 may control the piston driver 330 such that the punching oil PO input through the user interface 362 may be discharged at a constant flow amount and flow rate as the electrode plate EP moves, and may control the piston driver 330 such that the piston driver 330 may stop while the electrode plate EP stops.

In an implementation, the punching oil supply device 300 may include a plurality of syringe pumps capable of precisely controlling the flow amount and flow rate of a fluid. The syringe pumps may respectively correspond to the sprayers 200 to adjust the flow amount and flow rate of the punching oil PO for each sprayer 200.

Referring again to FIG. 1, the coating controller 400 may control a punching oil coating process for the uncoated portion NO of the electrode plate EP step by step to perform uniform supply and uniform coating of the punching oil PO.

In an implementation, the coating controller 400 may organically control the punching oil coating process by obtaining process progress information on an active material coating process, which is a process before coating the punching oil PO, and a notching process which is a process after coating the punching oil PO.

In an implementation, in a state where conveyance of the electrode plate EP by the feed roller FR has been stopped, e.g., due to defects or the like in the active material coating process and/or notching process, the coating controller 400 may selectively block contact between the coating roller 120 and the uncoated portion NO to automatically prevent excessive coating of the uncoated portion NO with the punching oil PO.

The coating controller 400 may include a conveyance state detector 410 for detecting state information on a conveyance state of the electrode plate EP and may transmit the detected state information on the conveyance state of the electrode plate EP to the first and second detectors 133c and 361. In an implementation, the conveyance state detector 410 may also include a detection sensor for directly detecting whether the electrode plate EP is moving or may include an abnormal signal detector for detecting a signal on a process abnormality in an active material coating process or notching process.

The coating controller 400 may include a feeding controller 420 that may control an operation of the feed roller FR in a case where conveyance of the electrode plate EP is to forcibly stop and forcibly control the conveyance of the electrode plate EP for a coating control process. In an implementation, the coating controller 400 may further include various control devices to uniformly coating the uncoated portion NO with the punching oil PO.

According to the punching oil coater described above, the punching oil PO may be supplied to the sprayer 200 while maintaining a constant flow amount and flow rate. In an implementation, by forming the spray hole of the sprayer 200 to be the same as a width direction of the coating roller 120, an impregnation concentration of the punching oil PO of the coating roller 120 may be maintained constant. In an implementation, the coating of the uncoated portion NO with the punching oil may be performed by a rotational contact with the coating roller 120, and a punching concentration of the punching oil PO applied to the uncoated portion NO may be maintained uniformly.

In an implementation, a coating efficiency may be increased by coating the first and second uncoated portions NO together on mutually symmetrical surfaces of the electrode plate EP with the punching oil PO.

In an implementation, by automatically adjusting a contact between the coating roller 120 and the uncoated portion NO according to movement and stop states of the electrode plate EP, the stopped uncoated portion may be prevented from being excessively coated with the punching oil PO. In an implementation, as the electrode plate EP is stopped, the uncoated portion NO may be separated from the coating roller 120 by the contact driver 130, and supplying the punching oil PO to the sprayer 200 may be blocked.

In an implementation, coating efficiency of the uncoated portion NO with the punching oil PO may be increased, and coating uniformity may be increased.

FIG. 10 illustrates a schematic view showing a notching apparatus including a punching oil coater, according to one or more embodiments of the present disclosure. The same reference numerals are used for the same components as in FIG. 1, and repeated detailed descriptions of the same components may be omitted. As illustrated in FIG. 10, the notching apparatus 1000 may include a feed roller 600, the punching oil coater 500, a die 700 for punching, and a press 800.

After an active material coating process of coating an electrode base layer with an active material is completed and the electrode plate EP including a coated portion O and an uncoated portion NO is prepared, the electrode plate EP may be conveyed to a notching device to form an electrode tab on or from the uncoated portion NO. In an implementation, the electrode plate EP may be made of a flexible film formed of, e.g., polymer, and may be wound on a cylindrical reel. Accordingly, the electrode plate EP may be unwound from the cylindrical reel and then conveyed to the notching device through a plurality of feed rollers 600.

The feed rollers 600 may be positioned in inflection points, in which a conveyance direction is changed, to maintain tension of the conveyed electrode plate EP (e.g., of a polymer type) and change a conveyance direction. In an implementation, the feed rollers 600 may be positioned on both peripheral portions of the electrode plate EP, and accordingly, the electrode plate EP may be conveyed while coming into contact with a pair of feed rollers 600 at each inflection point.

Before being conveyed to the notching device, the uncoated portion NO of the electrode plate EP may be uniformly coated with the punching oil PO by the punching oil coater 500. The punching oil PO may be constantly supplied to the sprayer 200 by using the punching oil supply device 300 which may supply the punching oil PO at a constant flow rate like a syringe pump, and the sprayer 200 may uniformly maintain the impregnation concentration or amount of the coating roller 120 by spraying the punching oil PO uniformly in a width direction of the coating roller 120.

The coating roller 120 with a uniform impregnation concentration may coat the uncoated portion NO with the punching oil PO by a rotational contact with the uncoated portion NO. In an implementation, the punching oil PO may be uniformly applied onto the uncoated portion NO.

In an implementation, the contact between the coating roller 120 and the uncoated portion NO may be maintained only while the electrode plate EP is conveyed. In an implementation, the electrode plate EP may stop, and the coating roller 120 may be separated from the electrode plate EP to prevent the uncoated portion NO from being excessively coated with the punching oil PO.

In an implementation, a plurality of coating rollers 120 may be at adjacent inflection points to together coat the first uncoated portion NO1 and the second uncoated portion NO2 respectively on the first surface S 1 and second surface S2 of the electrode plate EP which are symmetric to each other, with the punching oil PO. In an implementation, coating efficiency of the uncoated portion NO with the punching oil PO may be increased.

The punching oil coater 500 may have substantially the same configuration as the punching oil coater 500 illustrated in FIG. 1, and repeated detailed descriptions of the punching oil coater 500 may be omitted.

The die 700 may include a base body on which the electrode plate EP is safely positioned to perform a punching process for the uncoated portion NO. The die 700 may have an opening 710 that corresponds to the set punch shape and penetrates the base body, and the electrode plate EP may be on an upper surface of the die 700 to cover the opening 710.

In order to form an electrode tab by the notching apparatus 1000, the other region of the uncoated portion NO (e.g., excluding the electrode tab) may have a punched shape, and the opening 710 may be positioned to correspond to the punch shape. In an implementation, a rear surface of the uncoated portion NO corresponding to the punch shape may be safely positioned on an upper surface of the die 700 to be exposed through the opening 710.

In an implementation, the electrode plate EP may be positioned on the upper surface of the die 700, and the press 800 (including a punch end having a shape corresponding to the punch shape) may press the uncoated portion NO from the upper part of the die 700 to separate the uncoated portion NO corresponding to the punch shape from the electrode plate EP. Accordingly, a part of the uncoated portion NO, which is not separated by the punch end and remains on the electrode plate EP, may form an electrode tab, and a part of the uncoated portion NO, which has a shape corresponding to the punch end and is separated from the electrode plate EP, may be a scrap and fall downward through the opening 710.

In an implementation, the uncoated portion NO may be coated with the punching oil PO to have a uniform thickness and when punched by the press 800, friction may be reduced, and electrode tabs and scraps that exactly match the punch shape may be obtained.

The scraps may move through the opening 710, may be collected through a loading track 900 near the opening 710, and may be discharged from the notching apparatus 1000.

Scraps matching the punch shape may be easily obtained by uniformly applying the punching oil PO along at least one pair of uncoated portions NO on peripheral portions of both sides of the electrode plate EP. Accordingly, it is possible to help prevent loading efficiency from being reduced due to scraps deviating from a punch shape during a process of collecting scraps.

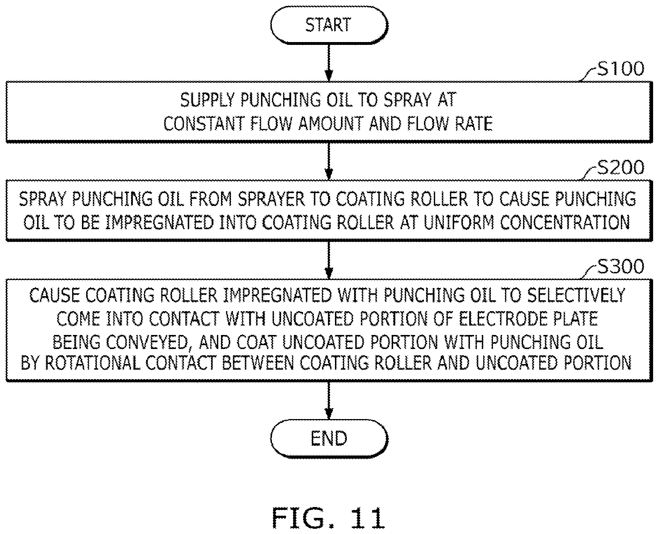

FIG. 11 illustrates a flowchart showing a method of coating an uncoated portion of an electrode plate with punching oil by using a punching oil coater, according to one or more embodiments of the present disclosure. Hereinafter, the same reference numerals are used for the same components as in FIGS. 1 to 7, and repeated detailed descriptions thereof may be omitted.

As illustrated in FIG. 11, the method may start by supplying the punching oil PO to the sprayer 200 at a constant flow amount and flow rate (S 100). In an implementation, the punching oil PO stored in the injection cylinder 310 may be pressurized by the piston 320 and may be discharged at the set flow amount and flow rate to the supply line 340 through the user interface 362. The discharged punching oil PO may be supplied to the sprayer 200 along the supply line 340. In an implementation, the piston 320 may move linearly within the injection cylinder 310 through the piston driver 330, which may precisely adjust an operation unit according to the flow amount and flow rate of the punching oil PO, like a step motor. In an implementation, the punching oil PO may be supplied to the sprayer 200 by using a syringe pump.

Next, the punching oil PO may be sprayed from the sprayer 200 to the coating roller 120 to be impregnated into the coating roller 120 at a uniform concentration (S200). The sprayer 200 may include the spray portion 220 extending in a width direction of the coating roller 120 and may spray the punching oil PO uniformly along a circumferential surface of the coating roller 120. Accordingly, a circumferential line of the coating roller 120 corresponding to the spray portion 220 may be impregnated with a punching oil at a uniform concentration. By continuously maintaining the constant punching oil concentration along the circumferential line of the rotating coating roller 120, the impregnation concentration of all of the coating rollers 120 may be uniform.

Next, the coating roller 120 (in which the punching oil PO is impregnated) may selectively come into contact with the uncoated portion NO of the electrode plate EP being conveyed, and the uncoated portion NO may be coated with the punching oil PO by a rotational contact between the coating roller 120 and the uncoated portion NO (S300). The coating roller 120 may be rotatably coupled to the support rod 110 passing through a central portion of the coating roller 120.

In an implementation, the support rod 110 may extend downwardly and/or may be fixed to the rotatable drive rod 131, and the coating roller 120 may selectively come into contact with the uncoated portion NO by rotation/movement of the drive rod 131 and/or support rod 110.

In an implementation, as the electrode plate EP is conveyed, the coating roller 120 may be in contact with the uncoated portion NO, and while the electrode plate EP is stopped, the drive rod 131 may be rotated to separate the coating roller 120 from the uncoated portion NO. Accordingly, the uncoated portion NO may be prevented from being excessively coated with the punching oil PO due to continuous coating of the stopped uncoated portion NO, and the uncoated portion NO may be uniformly coated in a longitudinal direction with the punching oil PO.

By applying the punching oil uniformly in a width direction of the coating roller 120 and maintaining the impregnation concentration uniformly along a contact surface of the coating roller 120, the punching oil may be uniformly applied to the coating roller 120 without any unapplied areas.

In an implementation, the coating rollers 120 may be in different positions and may together coat with the punching oil PO a pair of first and second uncoated portions NO1 and NO2 on symmetrical surfaces either side of the electrode plate EP .

The electrode plate EP may be continuously conveyed by rotating the second feed roller FR2 in contact with the second surface S2 of the electrode plate EP at a first position and the first feed roller FR1 in contact with the first surface S1 of the electrode plate EP symmetrical to the second surface S2 at a second position separated from the first position. In an implementation, the first uncoated portion NO1 on the first surface S1 and the second uncoated portion NO2 on the second surface S2 may be in contact with the second feed roller FR2 and the first feed roller FR1 to be pressed together by the second feed roller FR2 and the first feed roller FR1, and the first uncoated portion NO1 and the second uncoated portion NO2 may be individually coated together by rotation of coating rollers included in the first and second coaters 100a and 100b in which punching oil is impregnated. Accordingly, coating efficiency may be greatly increased by coating uncoated portions positioned on upper and lower surfaces of the electrode plate EP.

By way of summation and review, in order to form electrode tabs on uncoated portions through punching by using a press, the uncoated portions may be coated with punching oil to help reduce friction between punching ends and electrode plates during a punching process and to help prevent active materials from burning and sticking to boundaries of the punch ends in contact with the uncoated portions. Accordingly, punching oil coaters may be positioned at front ends of dies for punching to first apply the punching oil before uncoated portions are punched.

Some prior art punching oil coaters may apply the punching oil by using a spray method, and uncoated portions where the punching oil is not uniformly applied may occur. Some prior art punching oil coaters may spray the punching oil regardless of conveyance states of electrode plates, and the punching oil may be excessively applied to the electrode plates in a stop state.

Accordingly, a punching oil coater and a notching apparatus incorporating the present invention may help increase the coating uniformity of punching oil and may help prevent an electrode plate from being coated with punching oil in a stop state.

According to a punching oil coater and a notching apparatus including the punching oil coater of an embodiment, punching oil may be supplied to a sprayer at a constant flow amount and flow rate, and a punching oil impregnation concentration of a coating roller may be maintained constant by forming a spray hole of the sprayer to be the same as a width direction of the coating roller. Accordingly, a concentration of the punching oil on the uncoated portions may be uniformly maintained.

Furthermore, the coating efficiency may be increased by coating first and second uncoated portions positioned on mutually symmetrical surfaces of an electrode plate together with punching oil.

Furthermore, by automatically adjusting or selecting a contact between a coating roller and an uncoated portion according to movement and stop states of an electrode plate, the stopped uncoated portion may be prevented from being excessively coated with punching oil.

Accordingly, the efficiency of a punching oil coating process for an uncoated portion may be increased, and the coating uniformity may be increased.

One or more embodiments may provide a punching oil coater that may selectively come into contact with an electrode plate and selectively coat the electrode plate with punching oil while rotating, and may help increase coating uniformity of the punching oil by uniformly controlling a flow amount and flow rate of the punching oil.

One or more embodiments may provide a punching oil coater for coating a punching oil on an uncoated portion of an electrode for a secondary battery or a notching apparatus having the same.

Although the present disclosure has been described above with respect to embodiments thereof, the present disclosure is not limited thereto. Various modifications and variations can be made thereto by those skilled in the art within the equivalent scope of the appended claims.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A punching oil coater (500), comprising:
a coating device (100) configured to:
correspond to feed rollers (FR) that contact an electrode plate (EP) and move the electrode plate (EP) and are at different positions from each other, and
rotate to contact and coat a pair of uncoated portions of mutually symmetrical surfaces of the electrode plate (EP) with punching oil as the feed rollers (FR) press the pair of uncoated portions against the coating device (100) and move the electrode plate (EP);
a sprayer (200) configured to spray the punching oil onto the coating device (100);
a punching oil supply device (300) configured to uniformly control a flow amount and flow rate of the punching oil supplied to the sprayer (200); and
a coating controller (400) configured to control a punching oil coating operation for the electrode plate (EP).

2. The punching oil coater (500) as claimed in claim 1, wherein the coating device (100) includes:
at least one first coating device (100) in a first position configured to:
correspond to at least one first feed roller that contacts a second surface of the electrode plate (EP), and
coat at least one first uncoated portion on a peripheral portion of a first surface opposite to the second surface; and
at least one second coating device (100) at a second position separated from the first position in a conveyance direction of the electrode plate (EP), and configured to:
correspond to at least one second feed roller that contacts the first surface of the electrode plate (EP), and
coat at least one second uncoated portion on a peripheral portion of the second surface symmetrical to the first uncoated portion on the first surface.

3. The punching oil coater (500) as claimed in claim 1 or claim 2, wherein:
the coating device (100) includes:
a support rod (110) extending in a first direction, which is a width direction of the electrode plate (EP), and separated from the electrode plate (EP) in a second direction perpendicular to the first direction;
a coating roller (120) rotatably coupled to the support rod (110) that passes through a central portion of the coating roller (120), the coating roller (120) having a surface in which the punching oil is impregnated; and
a contact driver (130) coupled to an end of the support rod (110) and configured to drive the support rod (110) to cause the coating roller (120) to selectively come into contact with at least one of the uncoated portions,
whereby the coating roller (120) is configured to coat the at least one of the uncoated portions with the punching oil by a rotation contact with the at least one of the uncoated portions.

4. The punching oil coater (500) as claimed in claim 3, wherein the coating roller (120) includes:
a rotation roller (121) coupled to the support rod (110) by a bearing and configured to rotate the support rod (110) about a rotation axis; and
a porous coating member (122) surrounding a surface of the rotation roller (121) and impregnated with the punching oil.

5. The punching oil coater (500) as claimed in claim 3 or claim 4, wherein the contact driver (130) includes:
a drive rod (131) extending in a third direction perpendicular to the first direction and the second direction and fixed to the support rod (110);
a drive base (132) rotatably coupled to the drive rod (131); and
a rod rotator (133) configured to drive the drive rod (131) to reciprocate about the first direction to cause the coating roller (120) to selectively come into contact with the at least one of the uncoated portions.

6. The punching oil coater (500) as claimed in claim 5, wherein:
the rod rotator (133) includes:
a drive rod rotating shaft (133a) coupled to the drive base (132) and coupled to the drive rod (131);
a rotation drive device (133b) configured to rotate the drive rod rotating shaft (133a); and
a detector (133c) connected to the coating controller (400) to detect a conveyance state related to movement and stop of the electrode plate (EP) and transferring the conveyance state to the rotation drive device (133b), and
the rod rotator (133) is configured to rotate the drive rod (131) such that the coating roller (120) comes into contact with the at least one of the uncoated portions as the electrode plate (EP) moves, and is configured to rotate the drive rod (131) to separate the coating roller (120) from the at least one of the uncoated portions while the electrode plate (EP) is stopped.

7. The punching oil coater (500) as claimed in claim 6, wherein the drive rod rotating shaft (133a) includes a cam structure configured to reciprocate and rotate the drive rod (131) within a set range.

8. The punching oil coater (500) as claimed in any one of claims 3 to 7, wherein the sprayer (200) includes:
a spray waiting space (R) for storing the punching oil supplied from the punching oil supply device (300); and
a spray portion (220) in fluid communication with the spray waiting space (R) and configured to uniformly supply the punching oil to the coating roller (120).

9. The punching oil coater as claimed in claim 8, wherein the spray portion includes a single slot having a length corresponding to a width of the coating roller.

10. The punching oil coater as claimed in claim 8, wherein the spray portion includes a plurality of nozzles arranged at even intervals along a width of the coating roller.

11. The punching oil coater (500) as claimed in any one of the preceding claims, wherein the punching oil supply device (300) includes a syringe pump.

12. The punching oil coater (500) as claimed in any one of claims 1 to 10, wherein the punching oil supply device (300) includes:
a cylinder (310) having a storage space in which the punching oil is storable;
a piston (320) in the cylinder (310) to seal the storage space from an outside and configured to discharge or introduce the punching oil by adjusting a volume of the storage space through linear reciprocating motion; and
a piston driver (330) configured to control the linear reciprocating motion of the piston (320) to discharge the punching oil from the cylinder (310) at a uniform flow amount and flow rate.

13. The punching oil coater (500) as claimed in claim 12, wherein the punching oil supply device (300) further includes a flow controller (360) configured to set an operation unit to maintain the uniform flow amount and flow rate.

14. The punching oil coater (500) as claimed in claim 13, wherein:
the flow controller (360) includes a user interface for inputting the flow amount and flow rate of the punching oil and a volume of the punching oil stored in the storage space of the cylinder (310), and
the flow controller (360) is configured to control the piston driver (330) such that the punching oil is discharged while maintaining the flow amount and flow rate input through the user interface constant during movement of the electrode plate (EP) and stops the piston driver (330) while the electrode plate (EP) stops.

15. The punching oil coater (500) as claimed in any one of claims 12 to 13, wherein the piston driver (330) includes a step motor configured to adjust a unit rotation pitch according to the flow amount and flow rate.
